Europäisches Patentamt

European Patent Office

Office européen des brevets

(19)

(11) Veröffentlichungsnummer: **0 122 636**
**A2**

(12) # EUROPÄISCHE PATENTANMELDUNG

(21) Anmeldenummer: 84104373.0

(22) Anmeldetag: 18.04.84

(51) Int. Cl.³: **B 29 H 5/01**

---

(30) Priorität: 19.04.83 DE 3314152

(43) Veröffentlichungstag der Anmeldung:
24.10.84 Patentblatt 84/43

(84) Benannte Vertragsstaaten:
AT BE CH DE FR GB IT LI LU NL SE

(71) Anmelder: Saar-Gummiwerk GmbH

D-6648 Wadern-Büschfeld(DE)

(72) Erfinder: Baldauf, Hans-Joachim, Dr.
Eisenbahnstrasse 15
D-6620 Völklingen-Geislautern(DE)

(74) Vertreter: Lamprecht, Helmut, Dipl.-Ing.
Corneliusstrasse 42
D-8000 München 5(DE)

---

(54) Verfahren zur Herstellung eines Einbauteils in Form einer von einem extrudierten Elastomerprofil eingefassten Scheibe.

(57) Die Einfassung einer Scheibe, insbesondere einer Glasoder Kunstglasscheibe, mit einem unvulkanisierten Elastomerprofil in Form eines Extrudats, das in unvulkanisiertem Zustand mit dem Rand der Scheibe verbunden und anschließend in einer Volkanisieranlage vulkanisiert wird, um ein gebrauchsfertiges Einbauteil zu schaffen.

EP 0 122 636 A2

Croydon Printing Company Ltd

- 1 -

**0122636**

Saar-Gummiwerk GmbH

D-6619 Wadern-Büschfeld

<u>Verfahren zur Herstellung eines Einbauteils in Form</u>
<u>einer von einem extrudierten Elastomerprofil eingefaßten</u>
<u>Scheibe.</u>

Die Erfindung betrifft ein Verfahren zur Herstellung eines Einbauteils bestehend aus einer Scheibe, insbesondere einer Glas- oder Kunstglasscheibe, und einem den Scheibenrand einfassenden, extrudierten Elastomerprofil.

Als Beispiel für solche Scheiben und zugleich als wichtiges Anwendungsgebiet für das erfindungsgemäße Verfahren sind fest einzusetzende Fensterscheiben für Kraftfahrzeuge zu nennen. Die Einfassung durch ein Elastomerprofil dichtet den Spalt zwischen Fensterscheibe und Karosserieblech ab und kann zugleich als Halterung der Fensterscheibe im Fensterausschnitt der Karosserie dienen.

Früher hat man das Profil mit einer tiefen Glasnut versehen, welche beiderseits von stabil geformten Profilschenkeln begrenzt war, so daß das Profil eine ausreichende Formstabilität besaß, um die Fensterscheibe sicher zu halten.

Bei so stabiler Ausführung des Profils ergibt sich unvermeidlich im Randbereich der Scheibe ein Wulst, der die strömungsgünstig glatte Außenhaut der Karosserie unterbricht, was im Interesse eines niedrigen Kraftstoffverbrauchs und eines möglichst geringen Fahrgeräuschs insbesondere bei der Frontscheibe unerwünscht ist.

Man ist deshalb dazu übergegangen, das die Scheibe umgreifende Profil mit dem Scheibenrand zu verkleben, so daß die den Scheibenrand übergreifenden Profilschenkel keine Stützfunktion mehr ausüben müssen und wunschgemäß flach gestaltet werden können.

Während früher das Profil mit einer weiteren Nut versehen war, in die das Karosserieblech eingriff, um so die Verbindung zwischen Scheibe und Karosserie herzustellen, ist man inzwischen dazu übergegangen, die mit dem aufgeklebten Profil versehenen Scheiben in den Fensterausschnitt einzukleben, wobei die Klebeverbindung zwischen dem Profil und einer geeignet ausgebildeten Schulter des Karosserieausschnitts angeordnet wird.

Damit entfällt die Notwendigkeit, das Elastomerprofil während der Montage des Kraftfahrzeugs einzusetzen. Man kann vielmehr bereits fertig eingefaßte Fensterscheiben in den Karosserieausschnitt einsetzen, wobei lediglich vorher Klebstoff aufzutragen ist. Dies kommt dem Bestreben nach weitgehender Automatisierung der Montage entgegen, weil die Scheibe durch eine automatische Vorrichtung angehoben und in die Fensteröffnung eingesetzt und angedrückt werden kann.

Damit wird es vorwiegend Aufgabe der Zulieferer, mit einer Elastomereinfassung umreifte Fensterscheiben anzuliefern, wobei die Umreifung lückenlos und vor allem auch dauerhaft verklebt sein muß. Es ergibt sich dabei die Schwierigkeit, daß die Bindefreudigkeit vulkanisierter Profile relativ mäßig ist, so daß beim Aufkleben vulkanisierter Profile und gegebenenfalls auch durch die Beanspruchung bei Transport und Lagerung der eingefaßten Scheiben Mängel an den Klebestellen nicht auszuschließen sind.

Aufgabe der Erfindung ist es daher, das eingangs erwähnte Verfahren so auszugestalten, daß eine zuverlässige und dauerhafte Verbindung mit relativ einfachen Mitteln herstellbar ist.

Die Lösung dieser Aufgabe besteht darin, daß das Elastomerprofil in unvulkanisiertem Zustand als Extrudat auf den Rand der Scheibe aufgebracht und anschließend in einer Vulkanisieranlage vulkanisiert wird.

Die Bindung zwischen dem unvulkanisierten Material und dem der Scheibe ist wesentlich einfacher zu erreichen, als bei einem bereits vulkanisierten Profil, so daß mit der gewünschten Zuverlässigkeit eine dauerhafte Verbindung hergestellt werden kann.

Vorzugsweise wird man das unvulkanisierte Elastomerprofil auf den Rand der Scheibe aufkleben, worauf anschließend vulkanisiert wird. Das unvulkanisierte Elastomerprofil kann gegebenenfalls auch mittels eines Haftvermittlers auf den Rand der Scheibe aufgebracht werden. Das unvulkanisierte Extrudat kann ein reines Gummiextrudat sein, es sind aber auch andere Elastomere verwendbar, wobei sich insbesondere zur Einfassung von Kraftfahrzeugfensterscheiben Äthylen-Propylen-Dien-Monomer (EPDM) als geeignet erwiesen hat.

Das Profil kann auch zusammen mit einer Armierung aufgebracht werden, z.B. einer Metalleinlage, oder zusammen mit einer Textileinlage.

Die Vulkanisation kann auf jede geeignete Weise erfolgen, so kann man einen Vulkanisierkessel, eine Ultrahochfrequenzvulkanisieranlage, eine Heißluftvulkanisieranlage oder ein Salzbad verwenden.

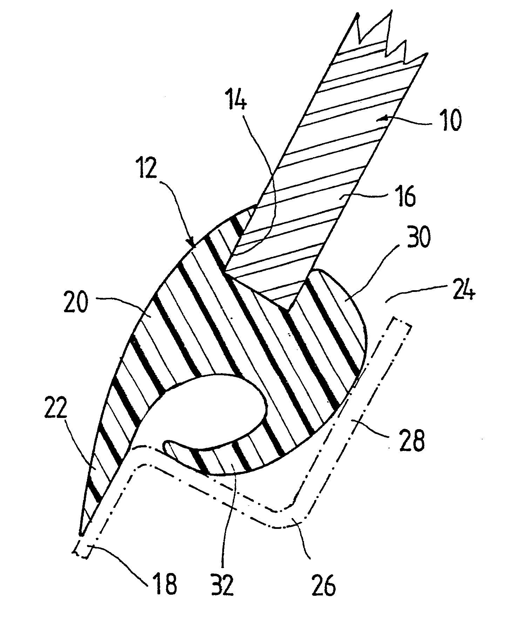

Die Zeichnung zeigt einen Querschnitt durch den Randbereich einer Kraftfahrzeugfrontscheibe mit einem aufgesetzten Profil und den Rand des Fensterausschnitts in der Karosserie eines Kraftfahrzeugs als Anwendungsbeispiel.

Die Fensterscheibe ist mit 10 bezeichnet. Ein Elastomerprofil 12 ist mit einer Glasnut 14 versehen, in die der Rand 16 der Fensterscheibe 10 eingreift. Der nach der Außenseite der Karosserie 18 zu gelegene Profilschenkel 20 ist sehr flach gehalten und liegt mit einer Zunge 22 von außen an der Karosserie 18 an. Der Fenster ausschnitt 24 der Karosserie 18 wird von einer Abwinkelung 26 begrenzt, die eine Schulter 28 bildet, gegen die der innere Schenkel 30 des Profils 12 gelegt und verklebt oder mechanisch verbunden wird. Dieser Schenkel 30 weist eine zusätzliche Dichtungslippe 32 auf. Der Rand 16 und das Profil 12 sind im Bereich der Glasnut 14 dauerhaft miteinander verbunden.

Es ist ersichtlich, daß die Erfindung nicht auf Fensterscheiben beschränkt ist. Sie kann vorteilhaft z.B. auch bei Paneelen oder ähnlichen scheibenförmigen Gebilden eingesetzt werden.

- 1 -

0122636

Patentansprüche:

1. Verfahren zur Herstellung eines Einbauteils bestehend aus einer Scheibe (10), insbesondere einer Glas- oder Kunstglasscheibe, und einem den Scheibenrand (16) einfassenden, extrudierten Elastomerprofil (12), dadurch gekennzeichnet, daß das Elastomerprofil (12) in unvulkanisiertem Zustand als Extrudat auf den Rand (16) der Scheibe (10) aufgebracht und anschließend in einer Vulkanisieranlage vulkanisiert wird.

2. Verfahren nach Anspruch 1, dadurch gekennzeichnet, daß das unvulkanisierte Elastomerprofil (12) auf den Rand (16) der Scheibe (10) aufgeklebt wird.

3. Verfahren nach einem der Ansprüche 1 oder 2, dadurch gekennzeichnet, daß das unvulkanisierte Elastomerprofil (12) mittels eines Haftvermittlers auf den Rand (16) der Scheibe (10) aufgebracht wird.

4. Verfahren nach einem der Ansprüche 1 bis 3, dadurch gekennzeichnet, daß als Elastomerprofil (12) ein reines Gummiextrudat aufgebracht wird.

5. Verfahren nach einem der Ansprüche 1 bis 3, dadurch gekennzeichnet, daß als Elastomerprofil (12) Äthylen-Propylen-Dien-Monomer (EPDM) aufgebracht wird.

6. Verfahren nach einem der Ansprüche 1 bis 5, dadurch gekennzeichnet, daß das Elastomerprofil (12)

C122636

zusammen mit einer Armierung aufgebracht wird.

7. Verfahren nach einem der Ansprüche 1 bis 5, dadurch gekennzeichnet, daß das Elastomerprofil (12) zusammen mit einer Textileinlage aufgebracht wird.